# EUROPEAN PATENT APPLICATION

(11) **EP 1 258 195 A2**
(43) Date of publication of application: **20.11.2002**
(21) Application number: 02010820.5
(22) Date of filing: 15.05.2002
(51) Int. Cl.: A22B 3/06

(54) **Method and apparatus for stunning livestock**

(30) Priority: 18.05.2001 GB 0112175
(71) Applicant: V.W.V. NV, 8630 Veurne (BE)
(72) Inventor: De Langhe, Daniel, 8670 Koksijde (BE)
(74) Representative: Bird, William Edward

(57) **Abstract**

The present invention relates to a method and a device for stunning livestock by transmitting an electrical current signal via electrodes to the animal to be stunned.

The electrical current signal applied comprises a first electrical current signal with a starting frequency higher than 200 Hz, preferably between 350 and 700 Hz, for a first time period, applying a second electrical current signal with an end frequency below 150 Hz, preferably between 50 Hz and 150 Hz, for a second time period, and, between the application of the first electrical current signal and the second electrical current signal, applying an intermediate electrical current signal with a plurality of gradually changing intermediate frequencies between the starting frequency and the end frequency during an intermediate time period.

## Description

### Technical field of the invention

The present invention relates to a method and a device for stunning livestock, in particular pigs, but not limited thereto. More specifically, the present invention relates to stunning by transmitting an electrical current via head electrodes to the animal to be stunned.

### Background of the invention

Nowadays, before killing animals in slaughterhouses, they are stunned by applying an electrical current to electrodes to the head and possibly also to the heart of the animal to be slaughtered.

It has been shown that applying a low frequency electrical current to head electrodes causes abrupt severe muscle contractions which cause vertebral fractures, internal blood spots, blood "splashes" and bleedings, muscle tearing and tendon tearing, which may be grouped together as meat quality problems. Blood spots (sometimes known as "splashes") and bleedings in the meat of an animal causes this meat not to be accepted as a high quality food product. The meat with blood spots or bleedings has to be processed as lower-grade meat.

In order to reduce the blood spots and bleedings, different techniques have been proposed.

In DE-3604738 a high frequency signal is applied, which is a signal with a frequency substantially higher than 50 Hz. A disadvantage of this method is that, the higher the frequency used for the stunning signal applied, the more time is required to stun the animals. If less stunning time is used, the animals are not stunned long enough. Applying a 400 Hz signal for example does create a modest muscle contraction but does not cause damage to the muscles, contrary to applying a 50 Hz signal. It is an aim of the stunning to get animals into a state so that they are unconscious, and stay in that state for at least 1.5 minutes (according, for instance, to European regulations). At 400 Hz, it takes quite a long time to get animals into such a state. However, in general in a slaughterhouse, there may be as little as about 2 seconds time to stun an animal, with about 4 seconds between stunning and sticking, and the animal stays on a bleeding table for about 2 minutes. This means that, if a signal of 400 Hz is applied to the electrodes according to DE-3604738, the pigs are already awake again when they reach the sticking conveyor in the slaughterhouse, which is unacceptable, they should reach the sticking conveyor when unconscious.

In EP-307031 is described that the low frequency stunning current surge is followed by a second series of current surges, the frequency of which is considerably higher than that of the stunning current surge. This plurality of current surges result in a muscle relaxation. A disadvantage of this method is that, due to the first low frequency current surge, abrupt severe muscle contractions still take place, thus causing quality problems.

In WO 93/01696, a combination of high frequency and low frequency in one waveform is described. This waveform is typically applied to the head only of the animal.

WO 96/10336 describes a device for stunning a pig, whereby a high frequency signal (> 100 Hz) is applied to the head of the animal, and thereafter a low frequency signal (< 100 Hz) is applied to the body of the animal. This solution requires both head and body electrodes. Also, the use of a low frequency to the body may cause the heart to stop or to be damaged.

It is an object of the present invention to provide a method and device for stunning animals, in particular pigs, which decrease the amount of blood spots or splashes in the meat.

### Summary of the invention

The above objective is accomplished by applying to at least head electrodes brought in contact with the animal to be stunned, a first electrical current signal, which is an alternating current or a pulsating direct current with a starting frequency of 200 Hz or higher (high frequency signal) for a first time period, applying a second electrical current signal, which is an alternating current or a pulsating direct current with an end frequency below 150 Hz (low frequency signal) for a second time period, and, between the application of the first electrical current signal and the second electrical current signal, applying an intermediate electrical current signal, which is an alternating current or a pulsating direct current which passes through a plurality of gradually changing intermediate frequencies between the starting frequency and the end frequency during an intermediate time period. In a preferred embodiment the frequency step size in the intermediate time period is less than 50 Hz, more preferably less than 20 Hz and most preferably less than 10 Hz. In the intermediate time period the frequency may change from the high value to the low value in a quasi-continuous manner (i.e. in a series of many small steps) or may change smoothly between the high and the low values. The change of frequency with time in the intermediate time zone may be linear or non-linear with time. Although not wishing to be limited by theory, it is assumed that the starting frequency higher than 200 Hz provides a modest muscle contraction, which gradually goes over, by applying an intermediate electrical current signal with gradually changing intermediate frequencies, to a severe muscle contraction. By gradually contracting the muscles up to the state of severe contraction instead of by abruptly obtaining the severe muscle contraction, carcass damage or quality problems are avoided.

The intermediate electrical current signal may comprise a plurality of discrete frequency steps going from the starting frequency to the end frequency, preferably of equal frequency change, but most preferably comprises a set of quasi-continuous gradually changing frequencies or may change continuously. The starting frequency preferably is between 350 and 700 Hz, more preferably between 350 and 450 Hz. The end frequency preferably is between 50 and 150 Hz, more preferably between 50 and 100 Hz.

The first time period lasts preferably between the time needed for a muscle to react to the applied signal and 40 % of the total stunning time. The second time period preferably lasts between 10% and 40 % of the total stunning time. The intermediate time period preferably lasts between 30% and 60% of the total stunning time. The sum of the first time period, the intermediate time period and the second time period is 100% of the stunning time.

The method according to the present invention reduces blood spots by 50% compared to the application of a low frequency stunning current.

During application of the intermediate electrical current signal having a plurality of intermediate frequencies, its voltage may be decreased or increased. The voltages used may lay between 250 V and 470 V.

The method described above may be carried out according to the present invention by a device for stunning livestock by means of an electrical current signal, comprising a set of at least head electrodes for applying the electrical current signal to the head of the animal, and a signal generator for generating the electrical current signal to be applied to the set of head electrodes so that the electrical current signal comprises a first electrical current signal, which is an alternating current or a pulsating direct current with a starting frequency higher than 200 Hz (high frequency signal) during a first time period, a second signal, which is an alternating current or a pulsating direct current with an end frequency below 150 Hz (low frequency signal) during a second time period, and an intermediate signal, which is an alternating current or a pulsating direct current which passes through a plurality of gradually changing intermediate frequencies between the starting and the end frequency during an intermediate time period. The signal generator preferably generates signals such that the starting frequency is between 350 and 700 Hz, more preferably between 350 and 450 Hz, and the end frequency is between 50 and 150 Hz, more preferably between 50 and 100 Hz.

The plurality of intermediate frequencies may comprise a set of discrete frequency steps, preferably of equal frequency change, but preferably is a set of quasi-continuous gradually changing frequencies, which change from the starting frequency to the end frequency. The change may be a continuous change in frequency. For example, in one embodiment, the change from the starting frequency to the end frequency, is done in discrete steps, evenly spread over the intermediate time period.

The head electrodes may be penetrating or non-penetrating electrodes. In case penetrating electrodes are used, signals with lower voltages may be applied (between 250 V and 350 V).

The signal generator preferably comprises a frequency converter for converting the frequency of a supply signal consecutively into the starting frequency, the plurality of gradually changing intermediate frequencies and the end frequency.

The device may furthermore comprise a timer for timing each of the electrical current signals, so as to apply the first electrical current signal during a first time period which lasts preferably between the time needed for a muscle to react to the applied signal and 40 % of the total stunning time, so as to apply the second electrical current signal during a second time period preferably lasting between 10% and 40 % of the total stunning time, and so as to apply the intermediate electrical current signal during an intermediate time period preferably lasting between 30% and 60% of the total stunning time. The sum of the first time period, the intermediate time period and the second time period is 100% of the stunning time.

Furthermore, means may be provided for introducing stunning parameters such as the voltage, starting time, duration, end time, of the electrical current signal, the timing of the curve of the frequencies to be applied during the intermediate time period, the maximum value of the stunning current which may be used, etc.

The device may furthermore comprise means for decreasing the voltage of the intermediate signal during its application.

The device may also be provided with feedback means connected to a current limiter for limiting the maximum current applied to the set of electrodes brought in close contact with the animal.

Preferably, the device for stunning livestock according to the present invention is incorporated in an automated installation for stunning and slaughtering livestock. In such an automated installation, livestock may be continuously transported, in which case the head electrodes may move with the moving animals, or livestock may undergo an intermittent movement, in which case the head electrodes may be non-moving.

The present invention also provides a driving unit for a device for stunning livestock by means of an electrical current signal, the device comprising a set of head electrodes for applying the electrical current signal. The driving unit is adapted to control a signal generator for generating the electrical current signal to be applied to the set of electrodes so that the electrical current signal comprises a first signal, which is an alternating current or a pulsating direct current with a starting frequency higher than 200 Hz during a first time period, a second signal, which is an alternating current or a pulsating direct current with an end frequency below 150 Hz during a second time period, and between the first signal and the second signal, an intermediate signal, which is an alternating current or a pulsating direct current which passes through a plurality of gradually changing intermediate frequencies during an intermediate time period. The driving unit may be programmable, e.g. it may include a programmable digital device such as a microprocessor, a microcontroller, a programmable digital logic element such as a programmable gate array, Programmable Array Logic, Programmable Logic Array, or a Field Programmable Gate Array, (FPGA). In accordance with embodiments of the present invention a stunning device in accordance with the present invention may be programmed to provide different stunning processes (different voltages, different starting, intermediate and end frequencies, different timing for each of the signals). A computer (software) program may be downloaded into the programmable device, e.g. the microprocessor or FPGA of the driving unit.

Accordingly, the present invention includes a computer program product which provides the functionality of any of the methods according to the present invention when executed on a computing device. For example, the computer program product has code segments which provide means for applying a first electrical current signal, which is an alternating current or a pulsating direct current with a starting frequency of 200 Hz or higher (high frequency signal) for a first time period, mean for applying a second electrical current signal, which is an alternating current or a pulsating direct current with an end frequency below 150 Hz (low frequency signal) for a second time period, and, between the application of the first electrical current signal and the second electrical current signal, means for applying an intermediate electrical current signal, which is an alternating current or a pulsating direct current which passes through a plurality of gradually changing intermediate frequencies between the starting frequency and the end frequency during an intermediate time period. Further, the present invention includes a data carrier such as a CD-ROM or a diskette which stores the computer product in a machine readable form and which executes at least one of the methods of the invention when executed on a computing device.

These and other features and advantages of the present invention will become apparent from the following detailed description, taken in conjunction with the accompanying drawings, which illustrate, by way of example, the principles of the invention.

### Brief description of the drawings

Fig. 1 shows a simplified block diagram illustrating a device according to an embodiment of the present invention.
Fig. 2 is a block diagram illustrating in more detail a device according to an embodiment of the present invention.
Fig. 3 is a frequency-time diagram in accordance with an embodiment of the present invention.

### Description of the illustrative embodiments

The present invention will be described with respect to particular embodiments and with reference to certain drawings but the invention is not limited thereto but only by the claims. The drawings described are only schematic and are non-limiting.

According to the present invention, in order to stun animals, especially livestock such as e.g. pigs, a set of at least two head electrodes is applied to the head of the animal. An electrical current signal is applied to the set of electrodes which first has a frequency higher than 200 Hz (high frequency signal), and then changes to a signal with a frequency below 150 Hz (low frequency signal) during one stunning process, there being applied a signal which passes through a plurality of gradually changing intermediate frequencies between the high frequency and the low frequency signals.

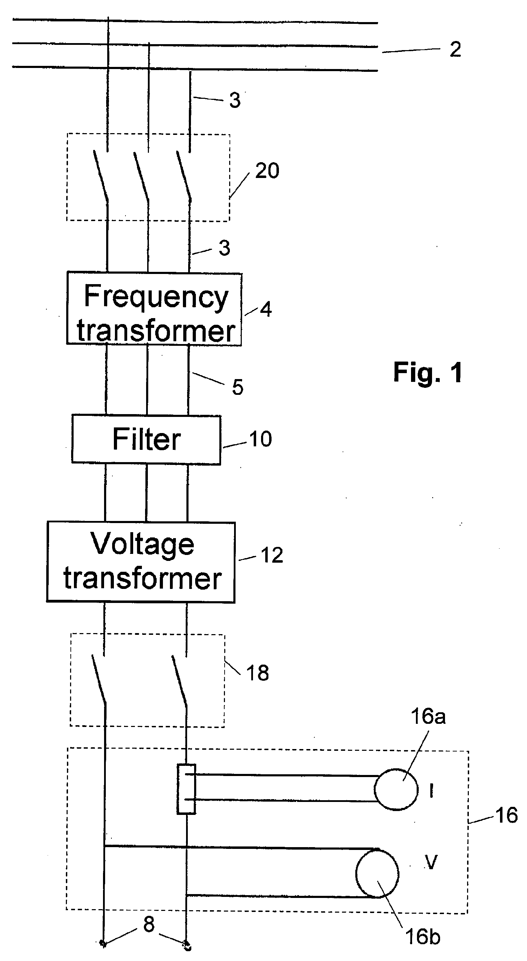

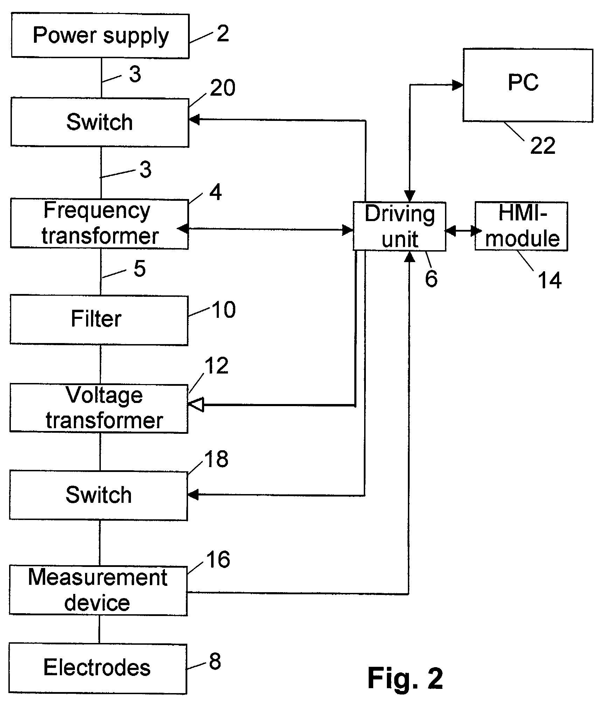

Figs. 1 and 2 illustrate an embodiment of a stunning device according to the present invention. The device is fed by a power supply 2, generating an AC supply signal with a frequency of 50 or 60 Hz, and with an amplitude between 220 and 500 Volts. A frequency transformer 4 is coupled to the power supply, and receives as input the output signal 3 of the power supply 2, and generates as output an electrical signal 5 with a frequency between 50 and 700 Hz, depending on certain parameters applied by a driving unit 6. This signal 5 is to be applied to the electrodes 8 brought into close contact with the head of the animal. Before applying the signal 5 to the electrodes 8, it may be filtered in a filter 10 to remove harmonics to obtain a more or less sinusoidal signal again, and transformed in a transformer 12. The aim of the transformer 12 is threefold: it provides a galvanic separation between the electrodes and the power supply, it provides a voltage regulation, and it has a certain factor of damping.

The frequency transformer 4 is driven by a driving unit 6 such as a PLC driving unit, which has parameters of the stunning process stored in a memory, and/or is connected to a human-machine interface module 14 for entering parameters of the stunning process into the driving unit 6. Such parameters can be the output voltage on the electrodes 8 obtained from the transformer 12, a limitation on the maximum current to be applied to the electrodes 8, the start and end times of the first signal, intermediate signal and end signal, as well as the start frequency, the plurality of gradually changing intermediate frequencies and the end frequency to be applied, etc. The human-machine interface 14 thus allows to choose for example the stunning frequencies and the stunning time. The driving unit 6 drives different parts of the device of the present invention differently depending on the values entered.

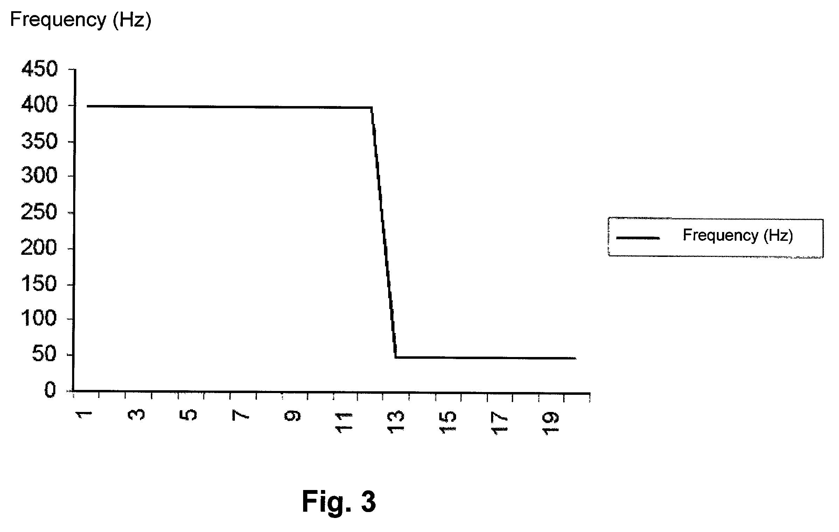

According to the parameters pre-programmed in a computer (software) program, stored in a memory of the driving unit 6 or entered e.g. by means of the human-machine interface module 14, the driving unit 6 causes the frequency transformer 4 to generate an electrical current signal 5 which has a starting frequency higher than 200 Hz, preferably between 350 and 700 Hz, still more preferred between 350 and 450 Hz, during a first time period, which has then a plurality of gradually changing intermediate frequencies between the first frequency and an end frequency during an intermediate time period, and which has then an end frequency which is lower than 150 Hz, preferably between 50 Hz and 150 Hz, still more preferred between 50 Hz and 100 Hz. An example of a stunning frequency-time diagram is shown in Fig. 3. The amplitude of the stunning current may be varied with time. The computer program may be stored on any suitable data carrier, such as a diskette, a CD-ROM, a removable hardrive, a tape drive or as punched cards or tape.

Parameters read out from a sensor (not represented) can also be entered directly via a connection between the sensor and the driving unit 6. Such a sensor can for example measure the amount of fat an animal has, so as to adapt the stunning to each individual pig.

Going over from the starting frequency higher than 200 Hz to the end frequency lower than 150 Hz can either be done by a set of quasi-continuously gradually changing frequencies, or by a plurality of gradually changing discrete frequency steps from the starting frequency to the end frequency, which frequency steps are preferably evenly spread over the intermediate time period. Preferably the change in frequency between each two subsequent frequencies in the intermediate time period is the same. Important is that each subsequent frequency in the intermediate time period causes slightly more muscle contraction, but that none of the subsequent frequencies causes an abrupt severe muscle contraction. Each frequency step may be 50 Hz or less, more preferably 20 Hz or less, and most preferably 10 Hz or less or 1 Hz or less.

Feedback can be provided in the system by adding a voltage and current measurement system, comprising a current measurement system 16a and a voltage measurement system 16b. The thus measured current and voltage are fed back to the driving unit 6, which can correspondingly change the settings of the transformer 12 if needed. The voltage and the current measured can be displayed on a screen of the human-machine interface. This data can also be sampled and stored in a memory of for example a computer 22 for being used afterwards, e.g. for traceability. This stunning data can be stored with other data concerning the slaughtered animal.

Because the time for stunning is short (about 2 seconds), the frequency transformer 4 is constantly driven, in order to rule out the starting period of the frequency transformer 4. The output to the electrodes is switched by a switching unit 18 located in front of the electrodes 8.

Preferably a safety switching unit 20 is also provided, between the power supply 2 and the device, for switching off the device.

Tests have been carried out whereby a signal was applied to the electrodes brought in contact with the head of pigs, which signal had a starting frequency of 400 Hz and an amplitude of 400 Volts and was applied during half a second. Such electrical signal applied to the head of the pig causes stunning, with only modest muscle contractions. Thereafter, the frequency has been quasi continuously gradually decreased to 50 Hz over a period of 1 second, which caused the muscle tension to increase but less sudden than if there was started with applying a 50 Hz signal, thus causing 50% less blood spots. Then the signal had an end frequency of 50 Hz during half a second. Pigs stayed stunned long enough for sticking them.

While the invention has been shown and described with reference to preferred embodiments, it will be understood by those skilled in the art that various changes or modifications in form and detail may be made without departing from the scope and spirit of this invention. For example, the phase of the signals supplied to stunning individual electrodes or sub-sets of electrodes in a set may differ. This may be achieved by having two separate but co-ordinated power sources. For example, if there are four electrodes in one set, the phase of the current sent to two electrodes may differ by 90° from the phase of the current sent to the other two electrodes.

## Claims

1. A method of stunning an animal by applying of an electrical current signal to the head of the animal, comprising
applying a first electrical current signal, which is an alternating current or a pulsating direct current with a starting frequency higher than 200 Hz for a first time period,
applying a second electrical current signal, which is an alternating current or a pulsating direct current with an end frequency below 150 Hz for a second time period,
and, between the application of the first and the second electrical current signal, applying an intermediate electrical current signal, which is an alternating current or a pulsating direct current which passes through a plurality of gradually changing intermediate frequencies during an intermediate time period.

2. A method according to claim 1, whereby the intermediate electrical current signal comprises a set of quasi-continuous gradually changing frequencies.

3. A method according to claim 1, whereby the intermediate electrical current signal comprises a set of gradually changing discrete frequencies.

4. A method according to any of the previous claims, whereby the starting frequency is between 350 and 700 Hz, and preferably between 350 and 450 Hz.

5. A method according to any of the previous claims, whereby the end frequency is between 50 and 150 Hz, preferably between 50 and 100 Hz.

6. A method according to any of the previous claims, whereby the first time period lasts between the time needed for a muscle to react to the applied signal and 40 % of the total stunning time.

7. A method according to any of the previous claims, whereby the second time period lasts between 10% and 40 % of the total stunning time.

8. A method according to any of the previous claims, whereby the intermediate time period lasts between 30% and 60% of the total stunning time.

9. A method according to any of the previous claims, whereby during the application of the intermediate electrical current signal, its voltage is decreased.

10. A device for stunning livestock by means of an electrical current signal, comprising a set of head electrodes for applying the electrical current signal,
a signal generator for generating the electrical current signal to be applied to the set of electrodes so that the electrical current signal comprises a first signal, which is an alternating current or a pulsating direct current with a starting frequency higher than 200 Hz during a first time period, a second signal, which is an alternating current or a pulsating direct current with an end frequency below 150 Hz during a second time period, and between the first signal and the second signal, an intermediate signal, which is an alternating current or a pulsating direct current which passes through a plurality of gradually changing intermediate frequencies during an intermediate time period.

11. A device according to claim 10, whereby the plurality of intermediate frequencies is a set of quasi continuous gradually changing frequencies.

12. A device according to claim 10, whereby the plurality of intermediate frequencies is a set of gradually changing discrete frequencies.

13. A device according to any of claims 10 to 12, whereby the signal generator comprises a frequency converter for converting the frequency of a supply signal into consecutively a starting frequency, a plurality of intermediate frequencies and an end frequency.

14. A device according to any of claims 10 to 13, furthermore comprising a timer for timing the first signal to last between the time needed for a muscle to react to the applied signal and 40 % of the total stunning time, the intermediate signal to last between 30% and 60% of the total stunning time, and the second signal to last between 10% and 40 % of the total stunning time.

15. A device according to any of claims 10 to 14, furthermore comprising means for introducing stunning parameters.

16. A device according to any of claims 10 to 15, furthermore comprising means for changing the voltage of the intermediate signal.

17. A device according to any of claims 10 to 16, furthermore provided with feedback means connected to a current limiter for limiting the maximum current applied to the set of electrodes.

18. A driving unit for a device for stunning livestock by means of an electrical current signal, the device comprising a set of head electrodes for applying the electrical current signal,
the driving unit being adapted to control a signal generator for generating the electrical current signal to be applied to the set of electrodes so that the electrical current signal comprises a first signal, which is an alternating current or a pulsating direct current with a starting frequency higher than 200 Hz during a first time period, a second signal, which is an alternating current or a pulsating direct current with an end frequency below 150 Hz during a second time period, and between the first signal and the second signal, an intermediate signal, which is an alternating current or a pulsating direct current which passes through a plurality of gradually changing intermediate frequencies during an intermediate time period.
